## Europäisches Patentamt

## European Patent Office

## Office européen des brevets

(19)

(11) Veröffentlichungsnummer: **0 043 918**
**B1**

(12) **EUROPÄISCHE PATENTSCHRIFT**

(45) Veröffentlichungstag der Patentschrift:
**30.05.84**

(51) Int. Cl.³: **F 16 J 15/44,** F 16 J 15/16

(21) Anmeldenummer: **81104539.2**

(22) Anmeldetag: **12.06.81**

(54) **Reibungsarme Dichtung.**

(30) Priorität: **16.07.80 DE 3026877**

(43) Veröffentlichungstag der Anmeldung:
**20.01.82 Patentblatt 82/3**

(45) Bekanntmachung des Hinweises auf die Patenterteilung:
**30.05.84 Patentblatt 84/22**

(84) Benannte Vertragsstaaten:
**CH FR GB IT LI**

(56) Entgegenhaltungen:
**CH - A - 276 810**
**CH - A - 532 215**
**DE - A - 1 475 588**
**DE - A - 1 525 513**
**DE - A - 1 937 418**
**DE - C - 642 841**

(73) Patentinhaber: **Herbert HÄNCHEN KG,
Brunnwiesenstrasse 3, D-7302 Ostfildern 1-Ruit (DE)**

(72) Erfinder: **Fabrowsky, Hans-Dieter,
Wilhelm-Maybach-Strasse 7, D-7303 Neuhausen (DE)**

(74) Vertreter: **Raeck, Wilfrid, Dipl.-Ing., Moserstrasse 8,
D-7000 Stuttgart 1 (DE)**

## Beschreibung

Die Erfindung betrifft eine reibungsarme Dichtung, mit einem Dichtring, der in einer Nut einer von zwei gegeneinander abzudichtenden und relativ zueinander bewegbaren Flächen aufgenommen ist und mit seinem aus der Nut herausragenden Innen- bzw. Aussenumfang mit Gleitpassung an der zu dichtenden Fläche anliegt.

Dichtungen dieser Art, sogenannte Schwimmringdichtungen, sind aus der DE-A-1525513, der DE-A-1937418 und der CH-A-532215 bekannt.

Beispielsweise beim Betrieb von Präzisions-Hydraulikzylindern, die von druck- oder lageabhängigen Aufnehmern über Steuer- oder Regelventile betätigt und auf Dauerprüfstand für mit wechselnden Beanspruchungen belastete Teile angewendet werden, kommt der Reibung der bewegten Zylinderteile eine grosse Bedeutung als weitgehend unberechenbarer Einflussfaktor zu. Dabei handelt es sich sowohl um die aus konstruktiven Gegebenheiten resultierende sogenannte Grundreibung, als auch um eine druckabhängige Reibung, die dadurch entsteht, dass die Dichtungselemente bei Druckbeaufschlagung stärker an die zu bewegende Kolbenstange (bzw. vom Kolben her an die relativ dazu bewegte Zylinderinnenwand) angepresst werden und dadurch den Reibwert häufig sehr verändern bzw. erhöhen.

Der dadurch entstehende «stick-slip-effect», welcher von dem Compound des Dichtelementes, der Temperatur, der Schmierfähigkeit des Mediums, der Oberflächenbeschaffenheit des abzudichtenden Teils und der Bewegungsgeschwindigkeit des abzudichtenden Teils zusätzlich erheblich beeinflusst wird, verbietet nicht selten den Einsatz und somit den ordnungsgemässen Betrieb von Hydraulikzylindern wegen des dadurch fehlerbehafteten Ergebnisses.

Diese Verhältnisse wirken sich beispielsweise ungünstig aus, wenn von den Steuer-/Regelorganen aus eine bestimmte Druckbeaufschlagung des Zylinders erfolgt, die im Prinzip zur Erzeugung der auf dem Testverlaufsplan vorgegebenen und durch den Zylinder aufzubringenden Prüfkraft ausreichen würde. Aufgrund der vom Beaufschlagungsdruck in nicht berechenbarer Weise abhängigen Reibungsverluste wird vom kraft-/lageabhängigen Aufnehmer ein Fehler festgestellt und zum Steuer-/Regelventil zurückgeführt, das nunmehr wiederum aufgrund der nicht vorhersehbaren, druckabhängigen Reibung im Zylinder möglicherweise die Regelung überkompensiert. Diese gewissermassen zwangsläufig auftretenden Regelungsfehler führen dazu, dass der vorgegebene Testverlauf weder kräftemässig noch zeitmässig eingehalten werden kann und dadurch dem Testresultat Bedingungen zugrunde liegen, die zu den tatsächlich am Prüfobjekt auftretenden Bedingungen keine Beziehung mehr haben.

Der Erfindung liegt die Aufgabe zugrunde, durch Verringerung insbesondere der druckabhängigen Reibungsverluste zwischen relativ zueinander bewegten Flächen, beispielsweise von Hydraulikzylindern, eine erhebliche Steigerung des Wirkungsgrades zu erreichen.

Zur Lösung dieser Aufgabe wird für eine Dichtung der eingangs bezeichneten Art mit aus formstabilem Material bestehendem Dichtring, der in der Nut mit axialem und radialem Spiel aufgenommen ist, erfindungsgemäss vorgeschlagen, dass an der dem Druckraum des Zylinders näheren Nutseitenwand die unbehinderte Druckausbreitung zum Nutengrund hin zulassende Abstandhalter vorgesehen sind, und dass die vom Druckraum des Zylinders entfernte Nutseitenwand bzw. der Dichtring eine rundum verlaufende, axial vorstehende Dichtkante aufweist, deren Aktionsfläche grösser ist als die dem Dichtring zugewandte Fläche der Abstandshalter.

Bei einer derartig aufgebauten Dichtung dringt das Druckmittel vom Druckraum her zwischen den Abstandshaltern hindurch bis zum Nutengrund und versucht, an der Dichtkante vorbei zu entweichen, wird jedoch daran gehindert, weil der Dichtring an seiner den Abstandshaltern gegenüberliegenden Stirnseite eine grössere freie Oberfläche besitzt, als die von der Dichtkante abgedeckte Oberfläche und somit von dem sich innerhalb der Nut ausbreitenden Druck an der Dichtkante anliegend gehalten wird, wobei nur vernachlässigbare Leckverluste entstehen. Der Dichtring ist somit innerhalb der mit Druckmittel beaufschlagten Nut gewissermassen schwimmend gehalten.

Massgeblich für die mit der erfindungsgemässen Dichtung erzielbaren, verminderten Reibung ist u.a. die Tatsache, dass diese Dichtung keinerlei Führungsaufgaben übernehmen muss. Da das sich in dem, vorzugsweise aus einem Passungsspiel resultierenden engen Spalt zwischen der abzudichtenden Fläche, beispielsweise einer Kolbenstange, und dem Umfang des Dichtringes ausbreitende Druckmittel vom Druckraum am Dichtring vorbei zu entweichen versucht, erzeugt es hydrodynamische Kräfte, die zur Wirkung haben, dass sich das Druckmittel weitgehend gleichmässig um die abzudichtende Fläche (Kolbenstange) herum verteilt und einen konzentrischen Spalt aufrechtzuerhalten versucht.

Gegenüber diesen hydrodynamischen Kräften, die eine Selbstzentrierung des Dichtringes bewirken, bleiben die vom Nutengrund her auf den Dichtring radial wirkenden Kräfte ohne nennenswerten Einfluss, da sie in sich im wesentlichen ausgeglichen sind. Somit entsteht eine sich gleichmässig um die abzudichtende Fläche (Kolbenstange) herum verteilende Leckölströmung, deren Menge druckabhängig gleich bleibt, aber vorteilhaft auch relativ klein gehalten werden kann, um hinter der Dichtung in einer Abführungsbohrung aufgefangen und von dort abgeleitet zu werden. Der sich bildende konzentrische Spalt gewährleistet eine hydrodynamische Vollschmierung, die zu einer in überraschend grossem Mass verminderten Reibung führt.

Bei einer Ausführungsform der Erfindung besitzt der Dichtring zylindrische Innen- und Aussenflächen, und seine der abzudichtenden Fläche gegenüberliegende Fläche enthält eine Mehrzahl von unter Längsabständen zueinander angeordneten kleinen Ringnuten. Diese Ringnuten sind wirksam, um als Labyrinth-Dichtung die Leckrate klein zu halten und auch um das Bestreben der hydrodynamischen Kräfte zu unterstützen, einen konzentrischen Spalt zu erzeugen und aufrechtzuerhalten.

Der Dichtring besteht vorzugsweise aus Metall, wobei allerdings unter Berücksichtigung der angewendeten Betriebsdrücke auch ein anderes, hinreichend formstabiles Material zur Anwendung kommen kann.

Um einerseits sicherzustellen, dass die Vorteile der Dichtung sofort in Funktion treten, sobald der Druckraum nach dem Umschalten oder nach einer Abschaltpause unter Druck gesetzt wird, wobei der Dichtring von der dann einsetzenden Lecköströmung gegen die Dichtkante bewegt wird, und um andererseits die dort auftretende Flächenpressung in Grenzen zu halten, wird vorgeschlagen, dass die Dichtkante einen grösseren Abstand vom Nutengrund als von der Nutöffnung aufweist. Auf diese Weise lässt sich die Dichtkante bzw. deren Dichtfläche ausreichend entlasten, wobei es keine Rolle spielt, ob die axial vorstehende Dichtkante an der Stirnfläche des Dichtringes oder an der der Stirnfläche gegenüberliegenden Nutseitenwand angeformt ist.

Die Abdichtfunktion der Dichtkante kann durch einen elastischen Dichtring unterstützt sein, der vorzugsweise innerhalb der Grenzen der die Dichtkante bildenden Dichtfläche angeordnet ist. Durch diese Massnahme lässt sich die auf die Dichtkante wirkende Flächenpressung zusätzlich verringern. Somit lassen sich von der Flächenpressung zwischen Dichtkante und Stirnfläche des Dichtringes bzw. Nutseitenwand, die zum Kleinhalten der Leckrate ausreichend gross sein muss, jedoch nicht exakt bestimmt werden kann, mindestens die schädlichen Spitzenwerte durch entsprechende Bemessung der Differentialfläche am Dichtring beseitigen bzw. durch die Abdichtfunktion des elastischen Dichtringes ersetzen.

Die erfindungsgemässe Dichtung ist bei konstruktiv entsprechend ausgelegter Umgebung gleichermassen zur Anwendung bei translatorischen oder rotativen Bewegungen geeignet. Gemäss einer anderen Ausführungsform kann bei einer abzudichtenden Zylinderinnenfläche die im Umfang eines Kolbens angeordnete Ringnut zueinander spiegelbildliche Seitenwände mit je einer axial vorspringenden Dichtkante aufweisen, während der mit Spiel in der Ringnut aufgenommene Dichtring an beiden Enden durch federnde Abstandshaltermittel bei drucklosem Zustand des Zylinders in eine Mittellage zwischen beiden Dichtkanten vorgespannt ist. Diese Bauform berücksichtigt gleichzeitig, dass der Druckraum wahlweise von der einen auf die andere Seite des Dichtringes wechseln kann.

Die Erfindung ist nachfolgend anhand mehrerer Ausführungsbeispiele in Verbindung mit den Zeichnungen näher erläutert. Es zeigen, jeweils schematisch,

Fig. 1 einen Längsschnitt durch einen Hydraulikzylinder im Bereich der an einem Ende angeordneten Kolbenstangen-Durchführung,

Fig. 2 einen Längsschnitt durch einen Hydraulikzylinder im Bereich des Kolbens, der mit einer Dichtung gemäss der Erfindung versehen ist, und

Fig. 3 ebenfalls einen Längsschnitt durch einen Hydraulikzylinder im Bereich von dessen Kolben mit einer Variante der Dichtung nach der Erfindung.

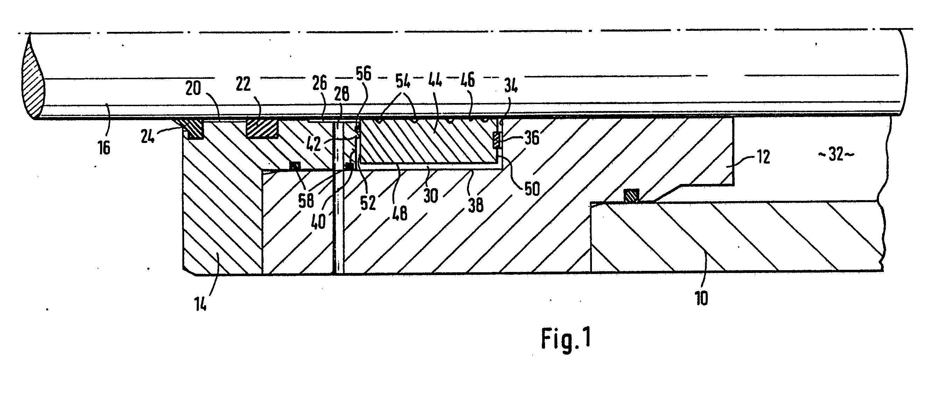

Entsprechend Fig. 1 ist am Ende eines Hydraulikzylinders 10 eine in das Innere des Zylinders hineinragende Führungsbüchse 12 für eine Kolbenstange aufgesetzt und zusammen mit einem Deckelteil 14 durch nicht gezeigte Schrauben mit dem Zylinder verbunden. Die Kolbenstange 16 kann mit Hilfe nicht gezeigter, in Nuten von Führungsbüchse 12 und Deckelteil 14 eingesetzter Gleitringe geführt sein. In einer Deckelbohrung 20 sind in Umfangsnuten ein Dichtring 22 sowie ein äusserer Abstreifring 24 untergebracht. Ausserdem enthält der Deckelteil 14 eine Auffang-Ringnut 26 und eine davon ausgehende, nach aussen geführte Lecköbohrung 28.

Eine vom äusseren Ende der Führungsbüchse 12 her eingebrachte zylindrische Bohrung bildet zusammen mit der benachbarten freien Stirnfläche des Deckelteils 14 eine Ringnut 30.

An der dem Druck- oder Ölraum 32 benachbarten Seitenwand 34 dieser Ringnut können Abstandshaltermittel vorgesehen sein, die rundum verteilt angeordnet und zwischen denen zum Nutengrund 38 führende Strömungswege freigelassen sind.

An der dem Druckraum 32 entfernten Nutseitenwand 40, welche die innere Stirnseite des Deckelteils 14 bildet, befindet sich eine ringsumlaufende, axial in die Nut vorstehende Dichtkante 42. Diese Dichtkante besteht aus einer radial verlaufenden Oberfläche mit einer darin angeordneten Nut zur Aufnahme eines elastischen Dichtringes 56.

In der Nut 30 ist ein Dichtring 44 aufgenommen, der aus Metall oder aus einem anderen formstabilen Material, z.B. Kunststoff mit derartigen Eigenschaften besteht. Der Dichtring 44 besitzt eine zylindrische Innenfläche 46, eine zylindrische Aussenfläche 48 sowie im wesentlichen radial verlaufende Stirnfläche 50 bzw. 52. Der Dichtring 44 ist so bemessen, dass er die Kolbenstange 16 mit seiner zylindrischen Innenfläche 46 mit Gleitsitz umgibt und an seinen drei übrigen Aussenflächen 48, 50, 52 allseitig mit Spiel in der Nut 30 untergebracht ist. Die Nut 30, die sich gemäss gezeigtem Ausführungsbeispiel in der Führungsbüchse 12 befindet, kann bei anderen Ausführungsformen selbstverständlich auch in einem anders ausgeführten Bauteil untergebracht sein, das der abzudichtenden Fläche gegenüberliegt, bzw. diese umgibt. Das Spiel zwischen Dichtring 44 und Nut 30 ist gerade so gross, dass sich der Druck aus dem Ölraum 32, soweit er sich durch das Gleitspiel zwischen Führungsbüchse 12 und Kolbenstange 16 fortsetzt, unbehindert bis zum Nutengrund 38 hin ausbreiten kann. Die zylindri-

sche Innenfläche 46 ist mit mehreren, vorzugsweise unter gleichen Längsabständen zueinander angeordneten, kleinen Ringnuten 54 versehen.

Als Abstandshalter zwischen der dem Ölraum 32 benachbarten Nutseitenwand 34 und Dichtring 44 ist entsprechend der Zeichnung ein in einer Nut des Dichtringes untergebrachter Abstandshaltering 36 vorgesehen, der freibleibende, radial verlaufende Öffnungen oder Bohrungen enthält, durch die das Druckmittel ungehindert zum Nutengrund 38 gelangt. Als Abstandshalter kann anstelle des in Figur 1 gezeigten Ringes 36 ein Rundschnurring mit Einkerbungen vorgesehen sein. Anstelle der gezeigten Ausführungsform kann die Dichtkante 42 auch von der Stirnfläche 52 des Dichtringes 44 axial vorstehen, um sich an die Nutseitenwand 40 anzulegen.

Die beschriebenen Dichtverhältnisse stellen sich sowohl ein, wenn die Kolbenstange 16 einwärts in Richtung auf den Druckraum 32 gezogen wird, als auch dann, wenn sich die Kolbenstange nach aussen bewegt, da auch dann im Druckraum 32 ein Überdruck entsprechend dem Verdrängungsdruck herrscht bzw. entsprechende, geeignete Vorkehrungen dazu getroffen worden sind.

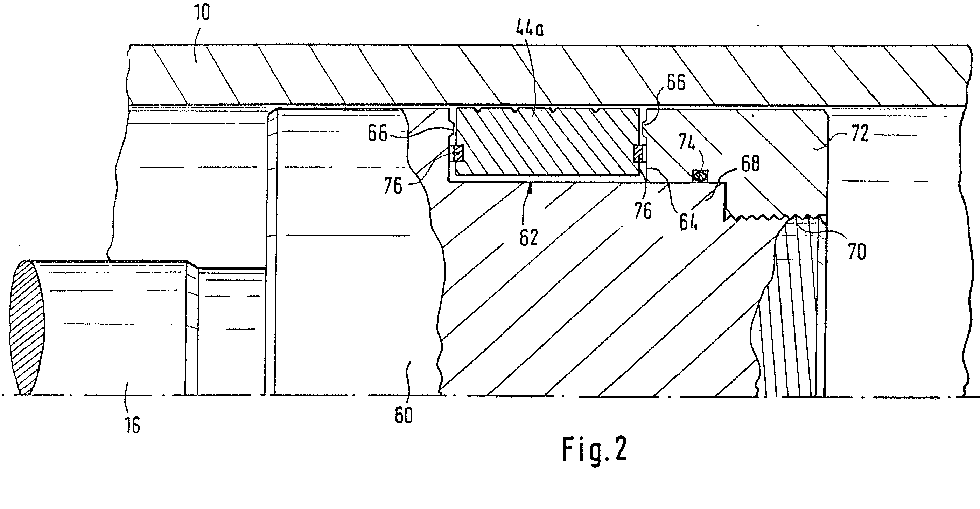

Fig. 2 erläutert das erfindungsgemässe Dichtprinzip in Anwendung bei einem Kolben 60 eines Hydraulikzylinders 10, der wahlweise auf der einen oder anderen Seite stärker hydraulisch belastet wird. Der Kolben 60 enthält eine Ringnut 62 mit zueinander spiegelbildlichen Seitenwänden 64, von denen jeweils eine metallische Dichtkante 66 in Axialrichtung vorsteht.

Die Ringnut entsteht aus einem im Durchmesser abgestuften Abschnitt 68 des Kolbens und aus einem auf einen Gewindeabschnitt 70 des Kolbens aufgeschraubten Ringteils 72, der mit der anderen Seitenwand 64 und Dichtkante 66 versehen und zur Ringnut hin durch einen O-Ring 74 abgedichtet ist.

In der Ringnut 62 ist, wie beim Beispiel nach Fig. 1, ein Dichtring 44a aus Metall oder ähnlichem Material mit allseitigem Spiel aufgenommen, der mit Gleitsitzpassung an der Innenwand des Zylinders 10 geführt ist. Radial innerhalb der Dichtkanten 66 sind jeweils in Nuten an beiden Enden des Dichtringes federnde Abstandshalterringe 76 aufgenommen, die unter allen auftretenden Bedingungen freibleibende, radial verlaufende Öffnungen enthalten, durch die das Druckmittel ungehindert zum Grund der Ringnut 62 gelangt. Aufgrund ihrer entgegengesetzt wirkenden Federungseigenschaften halten die Abstandshalterringe 76 den Dichtring 44a im wesentlichen in der Mitte zwischen den Dichtkanten 66. Auf diese Weise wird dafür gesorgt, dass der Dichtring bei geneigtem oder aufrechtem Zylinder sich nicht aufgrund seines Eigengewichtes zunächst z.B. an die dem Druckraum des Zylinders benachbarte Dichtkante anlegt. Dies Fehlverhalten hätte unter anderem zur Folge, dass die Wirkung der hydrodynamischen Zentrierung des Kolbens in Verbindung mit der sachgerechten Abdichtung erst verspätet einsetzt, nachdem der Dichtring aufgrund des Beaufschlagungsdruckes gegen die gegenüberliegende Dichtkante bewegt worden ist, so dass keine genauen, kurzzeitigen Stellbewegungen mit dem Kolben möglich wären.

Im übrigen entspricht die Wirkungsweise des Dichtringes 44a in Fig. 2 weitgehend derjenigen des Dichtringes in Fig. 1. Sobald der links oder rechts vom Kolben 60 befindliche Druckraum beaufschlagt wird, baut sich von dort eine Leckölströmung auf, die vom Umfang des Kolbens in die Ringnut 62 eindringt, und zwar an der dem Druckraum benachbarten Dichtkante 66 vorbei, durch die Öffnungen des Abstandshalterringes 76 bis zur Unterseite des Dichtringes 44a, der mit seinem Aussenumfang mit möglichst enger Gleitpassung im Zylinder 10 geführt ist, und vom Boden der Ringnut 62 weiter über die Öffnungen des anderen Abstandshalterringes 76 bis zu der Dichtkante 66, gegen die der Dichtring unter der für dieses Ausführungsbeispiel geltenden Voraussetzung angepresst wird, dass sich der Druck auf beiden Kolbenseiten voneinander nicht unerheblich unterscheidet.

Unter dieser Voraussetzung wird der Dichtring 44a gegen die dem Druckraum gegenüberliegende Dichtkante 66 angepresst, wobei nach der impulsmässigen Verschiebung des Dichtringes 44a in die dem Druckraum entgegengesetzte Richtung der Differenzdruck sofort verstärkt wird, sobald der Dichtring an der Dichtkante 66 anliegt. Der Kolben 60 mit der angeschlossenen Kolbenstange ist im Rahmen seiner Passung innerhalb des Zylinders 10 normalerweise in Radialrichtung frei beweglich, wird jedoch während des Betriebes durch den Dichtring 44a, wie oben beschrieben, in der Ringnut 62 hydraulisch zentriert, wobei dieser Vorgang schon bei verhältnismässig geringen Druckdifferenzen zur Wirkung kommt, beispielsweise in der Grössenordnung von 10 bar.

Die bei eingeschaltetem Druck zunächst auftretende beträchtliche Leckströmung an der Dichtkante 66 vorbei besitzt eine hohe Geschwindigkeit, die dazu führen kann, dass elastomere Dichtungsmaterialien ausgewaschen oder herausgespült bzw. bei plötzlich aufprallendem Dichtring durch dann entstehende Kavitation beschädigt werden. Aus diesem Grund ist bei der Ausführungsform nach Fig. 2 die Dichtkante 66 aus Metall ausgeführt, ohne die in Fig. 1 gezeigte zusätzliche Dichtung.

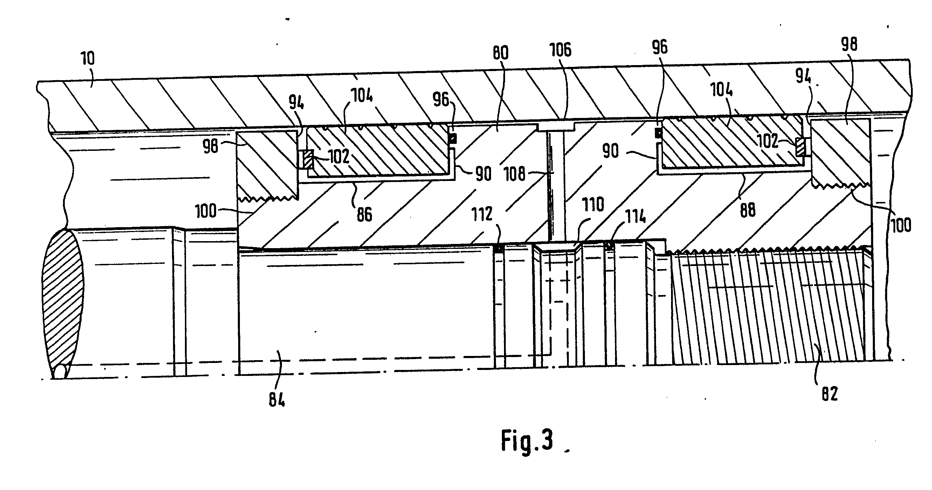

Fig. 3 zeigt die Anwendung des erfindungsgemässen Dichtprinzips bei einem Kolben 80 in einem Hydraulikzylinder 10, in dem zu beiden Seiten des Kolbens gleich hohe Drücke vorhanden sein können, wobei in diesem Fall die Kolbenbewegung aufgrund der unterschiedlich grossen Kolbenstirnflächen erfolgt. Da der Dichtring 44a nach Fig. 2 bei gleich hohen Drücken auf beiden Seiten eine instabile und nicht definierte Lage einnehmen würde, die keine Abdichtung gewährleistet, ist gemäss Fig. 3 die Anordnung ähnlich getroffen wie in Fig. 1 allerdings in einem doppelten bzw. symmetrischen Aufbau zu beiden Seiten der Kolbenlängsmitte.

Der auf einen Gewindeabschnitt 82 der Kolbenstange 84 aufgeschraubte Kolbenkörper 80 enthält am Umfang in der Nähe seiner Enden jeweils eine Ringnut 86, 88 mit einer vom Kolbenende entfernten Seitenwand 90, die eine mit einem Dichtring versehene Dichtkante 96 aufweist. Die dem Kolbenende jeweils benachbarte Nutseitenwand 94 wird jeweils durch einen auf einen Gewindeabschnitt 102 des Kolbenkörpers aufgeschraubten Ringteil 98 gebildet. In jeder Ringnut 86 bzw. 88 ist ein Dichtring 104 aus Metall oder ähnlichem Material aufgenommen, der durch einen in Axialrichtung wirkenden und in einer seitlichen Nut des Dichtringes untergebrachten, federnden Abstandshalterring 102 in Richtung auf die Dichtkante 96 vorgespannt ist. Jeder Dichtring 104 ist, wie auch derjenige nach Fig. 2, an seinem Aussenumfang mit einer Mehrzahl von kleinen Ringnuten versehen, die als Labyrinth-Dichtung wirken und ist dort mit einer verhältnismässig engen Gleitsitzpassung im Zylinder 10 geführt. Die federnden Abstandshalterringe 102 enthalten radial verlaufende Bohrungen oder Durchlässe, so dass das Druckmittel unbehindert zum Boden der Ringnut 86 bzw. 88 strömen kann.

Vorzugsweise mittig zwischen den beiden Dichtringen 104 enthält der Kolben 80 eine Umfangsnut 106, die über eine oder mehrere Radialbohrungen 108 mit einer Leckölsammelnut 110 der Kolbenstange 84 in Verbindung steht, von wo aus das Lecköl entsprechend Fig. 3 über Bohrungen in der Kolbenstange aus dem Zylinder herausgeleitet wird. Die Leckölnut 110 ist nach beiden Richtungen durch O-Ringe 112, 114 auf der Kolbenstange abgedichtet.

**Patentansprüche**

1. Reibungsarme Dichtung mit einem aus formstabilem Material bestehenden Dichtring (44), der in einer Nut (30) einer von zwei gegeneinander zu dichtenden und relativ zueinander bewegbaren Flächen mit axialem und radialem Spiel aufgenommen ist und mit seinem aus der Nut herausragenden Umfang mit Gleitpassung an der zu dichtenden Fläche anliegt, insbesondere zur Anwendung bei Präzisionshydraulikzylindern, dadurch gekennzeichnet, dass zwischen der dem Druckraum (32) näheren Nutseitenwand (34) und dem Dichtring (44) die unbehinderte Druckausbreitung zum Nutengrund (38) hin zulassende Abstandshaltermittel (36) vorgesehen sind, und dass zwischen der vom Druckraum entfernten Nutseitenwand (40) und dem Dichtring (44) eine rundum verlaufende, axial vorstehende Dichtkante (42) wirksam ist, deren Aktionsfläche grösser ist als diejenige der Abstandshaltermittel (36) zwischen Dichtring und der gegenüberliegenden Nutseitenwand (34).

2. Dichtung nach Anspruch 1, dadurch gekennzeichnet, dass in die an der abzudichtenden Fläche (16) mit Gleitsitz anliegende zylindrische Oberfläche (46) des Dichtringes (44) eine Mehrzahl von unter Längsabständen zueinander angeordneten, kleinen Ringnuten (54) eingestochen sind, die als Labyrinth-Dichtung wirken.

3. Dichtung nach Anspruch 1 oder 2, dadurch gekennzeichnet, dass die zwischen der vom Druckraum (32) entfernten Nutseitenwand (40) und der entsprechenden Stirnfläche (52) des Dichtringes angeordnete Dichtkante (42) vom Nutengrund (38) einen grösseren Abstand als von der Nutöffnung aufweist.

4. Dichtung nach Anspruch 3, dadurch gekennzeichnet, dass die Dichtkante (42) von der dem Druckraum (42) entfernten Nutseitenwand (40) in Axialrichtung vorsteht und eine zur Stirnfläche (52) des Dichtringes (44) parallele, vorzugsweise radial verlaufende Oberfläche besitzt.

5. Dichtung nach einem der vorhergehenden Ansprüche, dadurch gekennzeichnet, dass die Abdichtfunktion der Dichtkante (42) durch einen elastischen Dichtring (56) unterstützt ist, der radial innerhalb oder ausserhalb von oder innerhalb der zur Dichtkante (42) gehörenden ringsumverlaufenden Dichtfläche angeordnet ist.

6. Dichtung nach einem der vorhergehenden Ansprüche, dadurch gekennzeichnet, dass die Nut (30) in der Kolbenstangendurchführung eines Zylinders angeordnet ist und der in der Nut schwimmende Dichtring (44) gegenüber der Kolbenstange (16) abdichtend wirkt.

7. Dichtung nach einem der Ansprüche 1 bis 5, dadurch gekennzeichnet, dass die Nut (30) am Umfang eines Kolbens angeordnet ist und der in der Nut schwimmende Dichtring gegenüber der Zylinderinnenwand abdichtend wirkt.

8. Dichtung nach einem der Ansprüche 1 bis 6, dadurch gekennzeichnet, dass an einer, vom Druckraum (32) aus gesehen, hinter der Nut (30) liegenden Stelle eine Sammelringnut (26) und eine sich daran anschliessende, nach aussen geführte Leckölbohrung (28) vorgesehen sind.

9. Dichtung nach einem der vorhergehenden Ansprüche, dadurch gekennzeichnet, dass als Abstandshaltermittel ein in einer Nut der Stirnfläche (50) des Dichtringes (44) oder in der gegenüberliegenden Nutseitenwand (34) teilweise aufgenommener und fixierter Rundschnurring (36) vorgesehen ist, der Einkerbungen für die unbehinderte Druckausbreitung zum Nutengrund (38) hin enthält.

10. Dichtung nach Anspruch 9, dadurch gekennzeichnet, dass anstelle eines Rundschnurrings ein formstabiler Ring mit Radialbohrungen für den unbehinderten Durchtritt des Druckmediums verwendet wird.

11. Dichtung nach einem der Ansprüche 1 bis 4, dadurch gekennzeichnet, dass die im Umfang eines Kolbens angeordnete Ringnut (62) zueinander spiegelbildlich ausgebildete Seitenwände mit je einer axial vorspringenden Dichtkante (66) aufweist, und dass der allseitig mit Spiel in der Ringnut (62) aufgenommene Dichtring (44a) an beiden Enden durch federnde Abstandshaltermittel (76) bei drucklosem Zustand des Zylinders in eine Mittellage zwischen den beiden Dichtkanten (66) vorgespannt ist.

12. Dichtung nach Anspruch 11, dadurch gekennzeichnet, dass der Dichtring (44) an beiden Stirnseiten jeweils eine Nut enthält, in der ein elastischer Abstandshalterring (76) mit radialen Öffnungen für den unbehinderten Durchgang des Druckmediums aufgenommen ist, wobei der Abstandshalterring (76) an einer Stelle zwischen der Dichtkante (66) und dem Boden der Ringnut (62) an der Nutseitenwand anliegt.

13. Dichtung nach Anspruch 11, dadurch gekennzeichnet, dass die Dichtkanten (66) an den Seitenwänden der Ringnut (62) vollständig aus metallischem Material bestehen.

14. Dichtung nach einem der Ansprüche 1 bis 9, dadurch gekennzeichnet, dass auf dem Umfang eines Kolbens (80) zwei zu seiner Längsmitte symmetrische Dichtungen vorgesehen sind, jeweils bestehend aus einer über den Umfang verlaufenden Ringnut (86, 88), einer von der der Symmetrieebene näheren Seitenwand in Axialrichtung ausgehenden Dichtkante (96), einem in der Ringnut mit allseitigem Spiel angeordneten Dichtring (104), der durch einen mit Durchlassöffnungen versehenen Abstandshalterring (102) in Richtung auf die Dichtkante (96) vorgespannt ist, und dass zwischen den beiden Dichtungen am Kolbenumfang eine Auffangnut (106) mit einer sich daran anschliessenden, durch die Kolbenstange geführten Lecköllbohrung vorgesehen ist (Fig. 3).

**Revendications**

1. Joint d'étanchéité à friction faible, comportant une bague d'ètanchéité (44), qui est constituée en un matériau de formes stables, est logée, avec un jeu axial et radial, dans une rainure (30) de l'une de deux surfaces à étancher l'une par rapport à l'autre, et déplaçables l'une relativement à l'autre, et est appliquée, par son pourtour sortant de ladite rainure, à frottement doux, contre la surface à étancher, en particulier pour l'application à des cylindres hydrauliques de précision, caractérisé par le fait que des moyens d'écartement (36), permettant à la pression de se propager sans obstacle vers le fond (38) de la rainure, sont prévus entre la paroi latérale (34) de ladite rainure, la plus proche de la chambre de pression (32), et ladite bague d'étanchéité (44), et qu'une arête d'étanchéité (42), qui s'étend circulairement et forme une saillie axiale, agit entre la paroi latérale (40) de la rainure, éloignée de la chambre de pression, et ladite bague d'étanchéité (44), la surface d'action de ladite arête d'étanchéité (42) étant plus grande que celle des moyens d'écartement (36) entre la bague d'étanchéité et la paroi latérale (34) de la rainure, qui leur fait face.

2. Joint d'étanchéité selon la revendication 1, caractérisé par le fait que plusieurs petites rainures annulaires (54), espacées longitudinalement les unes des autres, et fonctionnant comme un joint labyrinthe, sont creusées dans la surface cylindrique (46) de la bague d'étanchéité (44), qui est appliquée à frottement doux contre la surface (16) à étancher.

3. Joint d'étanchéité selon la revendication 1 ou 2, caractérisé par le fait que l'arête d'étanchéité (42), qui est disposée entre la paroi latérale (40) de la rainure, éloignée de la chambre de pression (32), et la face extrême correspondante (52) de la bague d'étanchéité, est plus éloignée du fond (38) de la rainure (30) que de l'ouverture de ladite rainure (30).

4. Joint d'étanchéité selon la revendication 3, caractérisé par le fait que l'arête d'étanchéité (42) forme une saillie axiale partant de la paroi latérale (40) de la rainure (30), qui est éloignée de la chambre de pression (42), et qu'elle présente une surface qui est parallèle à la face extrême (52) de la bague d'étanchéité (44), et qui s'étend de préférence radialement.

5. Joint d'étanchéité selon l'une des revendications précédentes, caractérisé par le fait que la fonction d'étanchement de l'arête d'étanchéité (42) est renforcée par une bague élastique d'étanchéité (56), qui est disposée radialement à l'intérieur ou à l'extérieur de, ou bien à l'intérieur de la surface d'étanchéité qui s'étend circulairement et qui correspond à l'arête d'étanchéité (42).

6. Joint d'étanchéité selon l'une des revendications précédentes, caractérisé par le fait que la rainure (30) est disposée dans la traversée de la tige d'un piston d'un cylindre, et que la bague d'étanchéité (44) qui flotte dans la rainure assure l'étanchéité vis-à-vis de la tige du piston (16).

7. Joint d'étanchéité selon l'une des revendications 1 à 5, caractérisé par le fait que la rainure (30) est disposée sur le pourtour d'un piston, et que la bague d'étanchéité qui flotte dans la rainure, assure l'étanchéité vis-à-vis de la paroi interne du cylindre.

8. Joint d'étanchéité selon l'une des revendications 1 à 6, caractérisé par le fait qu'une rainure collectrice annulaire (26), et un trou de fuite pour l'huile (28), qui s'y raccorde, et qui est dirigé vers l'extérieur, sont prévus dans une zone qui, vue à partir de la chambre de pression (32) se trouve derrière la rainure (30).

9. Joint d'étanchéité selon l'une des revendications précédentes, caractérisé par le fait qu'un anneau en cordon rond (36), partiellement logé et bloqué dans une rainure de la face extrême (50) de la bague d'étanchéité (44) ou bien dans la paroi latérale opposée (34) de ladite rainure, est prévu comme moyen d'écartement, cet anneau de cordon comportant des entailles, permettant à la pression de se propager sans obstacle vers le fond (38) de la rainure.

10. Joint d'étanchéité selon la revendication 9, caractérisé par le fait qu'au lieu d'un anneau de cordon rond, on utilise un anneau de forme stable, pourvu de perçages radiaux permettant le passage sans obstacle du fluide sous pression.

11. Joint d'étanchéité selon l'une des revendications 1 à 4, caractérisé par le fait qu'une rainure annulaire (62), disposée sur le pourtour d'un piston, présente des parois latérales réalisées de façon à être symétriques l'une de l'autre par rapport à un plan et comportant chacune une arête d'étanchéité (66), formant une saillie axiale, et que la bague d'étanchéité (44a), qui est engagée dans ladite rainure annulaire (62), avec du jeu de tous les côtés, est mise sous pré-tension, lorsque le cylindre est sans pression, dans une position médiane entre les deux arêtes d'étanchéité (66), à ses deux extrémités, par des organes d'écartement (76) faisant ressort.

12. Joint d'étanchéité selon la revendication 11, caractérisé par le fait que la bague d'étanchéité (44) comporte, sur chacune de ses deux faces extrêmes, une rainure, dans laquelle est logée un anneau élastique d'écartement (76), pourvu d'ouvertures radiales, permettant le libre passage du fluide sous pression, ledit anneau d'écartement (76) étant appliqué sur la paroi latérale de la rainure dans une zone comprise entre l'arête d'étanchéité (66) et le fond de la rainure annulaire (62).

13. Joint d'étanchéité selon la revendication 11, caractérisé par le fait que les arêtes d'étanchéité (66) prévues sur les parois latérales de la rainure annulaire (62) sont constituées entièrement en un matériau métallique.

14. Joint d'étanchéité selon l'une des revendications 1 à 9, caractérisé par le fait qu'il comporte, sur le pourtour d'un piston (80), deux joints d'étanchéité, symétriques par rapport au milieu de sa longueur, et constitués chacun par une rainure annulaire (86, 88) qui s'étend sur le pourtour, une arête d'étanchéité (96) qui sort, dans la direction axiale, de la paroi latérale la plus proche du plan de symétrie, une bague d'étanchéité (104), qui est disposée dans la rainure annulaire avec du jeu de tous les côtés et qui est mise sous pré-tension dans la direction de l'arête d'étanchéité (96) par un anneau d'écartement (102), pourvu d'ouvertures de passage, et qu'il comporte, en outre, entre les deux joints d'étanchéité, sur le pourtour du piston, une rainure collectrice (106), avec un trou pour les fuites d'huile, qui s'y raccorde, et qui traverse la tige du piston (figure 3).

**Claims**

1. Low friction seal including a sealing ring made of dimensionally stable material accomodated with axial and radial play i in a groove formed in one of two relatively displaceable surfaces, this ring with its peripheral surface projecting from said groove engaging with sliding fit the surface to be sealed, particularly for applications in precision hydraulic cylinders, characterized in that spacer means (36) are provided for unhampered pressure propagation between the groove side wall (34) closer to the pressure chamber (32) and the sealing ring (44) towards the groove bottom (38), and in that an axially projecting annular sealing rim (42) is effective between the groove side wall (40), away from the pressure chamber and the sealing ring (44), the active area of said rim exceeding that of the spacer means between the sealing ring and the opposite groove side wall (34).

2. Seal according to claim 1, characterized in that the cylindrical surface (46) of the sealing ring (44) resting in seated and sliding manner against the surface (46) to be sealed includes a plurality of small annular grooves (54) which are milled-in at mutual longitudinal spacings and act as a labyrinth seal.

3. Seal according to claim 1 or 2, characterized in that the sealing rim (42) disposed between the groove side wall (40) away from the pressure chamber (32) and the corresponding end face (52) of the sealing rim is located at a distance from the groove bottom (38) which exceeds its distance from the groove opening.

4. Seal according to claim 3, characterized in that the sealing rim (42) projects in axial direction from the side groove side wall (40) which is away from the pressure chamber (42) and comprises a preferably radially extending surface parallel to the end face (52) of sealing ring (44).

5. Seal according to one of the preceding claims, characterized in that the sealing function of the sealin grim (42) is supported by an elastic sealing ring (56), which is mounted within the annular end surface belongig to the sealing rim (42) or radially inwardly or outwardly thereof.

6. Seal according to one of the preceding claims, characterized in that the groove (30) is located in the piston rod bush of a cylinder and in that the sealing ring (44) floating in the groove acts in sealing manner with respect to the piston rod (16).

7. Seal according to one of the claims 1–5, characterized in that the groove (30) is arranged at the circumference of a piston and in that the sealing ring floatring in the groove acts in sealing manner with respect to the cylinder inside wall.

8. Seal according to one of the claims 1–6, characterized in that a collecting annular groove (26) located behind the groove (30) as seen from the pressure chamber, and a leakage oil bore (28) connected to said collecting groove and leading outside are provided.

9. Seal according to one of the preceding claims, characterized in that an O-ring (36) partly seated and fixed in an groove of the end face (50) of the sealing ring (44) or in the opposite groove side wall (34) is provided as a spacer means and comprises notches for the unhampered propagation of pressure towards the groove bottom (38).

10. Seal according to claim 9, characterized in that in lieu of an O-ring, a dimensionally stable ring with with radial bore for the unhampered transmission of the pressure medium is used.

11. Seal according to one of the claims 1–4, characterized in that the circumferential groove (62) of a piston has symmetrical opposite side walls each with an axial projecting sealing rim (66), and in that the sealing ring (44a) floating with respect to all directions in the groove (62) is biased into a floating intermediate position between said opposite sealing rims (66) as long as the cylinder is not pressurized.

12. Seal according to claim 11, characterized in that the sealing ring (44a) includes a groove for seating a resilient spacer ring (76) having radial openings for non-restricted passage of pressurized leakage, said spacer ring resiliently engaging the opposing side wall of the groove at a position intermediate between the sealing ring and the bottom of the groove.

13. Seal according to claim 11, characterized in that the sealing rims (66) consist of and are machined from the metallic material of the piston body.

14. Seal according to one of the claims 1–9, characterized in that two similar grooves (86, 88) are arranged at the circumference of a piston (100) symmetrically with respect to its radial midplane, each groove having a side wall adjacent said mid-plane and including an axially projecting sealing rim (96), a sealing ring (104) floatingly arranged in each groove and biased by a spacer ring (102) towards said sealing rim, and a circumferential leakage collecting groove (106) intermediate both sealing units and in communication with a leakage discharge bore (108) within the piston rod.

Fig.1

Fig. 2

0 043 918

Fig.3

0 043 918